# EUROPEAN PATENT APPLICATION

(11) **EP 2 113 433 A1**
(43) Date of publication of application: **04.11.2009**
(21) Application number: 08425305.3
(22) Date of filing: 30.04.2008
(51) Int. Cl.: B60T 7/12

(54) **System and method for assisting the hill start of an industrial vehicle.**

(71) Applicant: Iveco S.p.A., 10156 Torino (IT)
(72) Inventor: Bertozzi, Franco, 10040 Druento (IT)
(74) Representative: Borsano, Corrado

(57) **Abstract**

This invention relates to a system and a method for assisting the hill start of an average or heavy industrial vehicle.

The system according to this invention is **characterized in that** it comprises an inclination sensor able to detect the inclination condition of the vehicle and to compare this data, by means of a control unit, with a threshold value, below this value the system is not activated, and with the data about the gear engaged, as to automatically determine the condition of a standing start on a road with an uphill inclination in the same direction as the driving direction.

## Description

This invention relates to a system and a method for assisting the hill start of a vehicle.

As is known, the standing start of a vehicle on a slope, in particular a hill start, that is when the inclination of the road has the same direction as the driving direction, is quite complicated, because it is necessary to engage the gear while operating on the foot brake or on the hand brake, and then it is necessary to accelerate and to release the clutch while releasing the brake at the same time.

In case of industrial vehicles, the hill start is complicated by the weight of the vehicle, for this reason the operations described above that the driver has to carry out are more difficult. When the driver releases the brake and, gradually but at the same time, he/she releases the clutch with the gear engaged and accelerates, the considerable weight of the vehicle subjects the clutch and the transmission parts to a considerable stress. If this sequence of operations is not exactly coordinated by the driver, the vehicle may roll backwards, very slowly at the beginning, but with a considerable inertia, which is proportional to the great mass of the vehicle itself, and subjects the parts mentioned above to a further stress.

The main task of this invention is to provide a system and a method for assisting the hill start of a vehicle, in particular of heavy industrial vehicles provided with a control unit managing the electric loads outside the cabin that is connected to the system, for example by means of one or more CAN lines.

In particular, in the scope of this task, the aim of this invention is to provide a system and a method suitable for assisting the driver and completely automated, that is which do not need any driver's intervention.

This task and these and other purposes that are explained below are achieved by a system and a method for assisting the hill start of the type comprising an electronic control unit able to manage the vehicle braking system, said control unit being also able to recognize if the accelerator control is or is not pressed or if the gear is or is not engaged, by means of appropriate sensors, whose information may be transmitted by means of CAN lines connected to the control unit. Moreover the system is **characterized in that** it further comprises an inclination sensor connected to or integrated in said control unit, so that said control unit is able to activate the hill start assist function when said inclination sensor detects a vehicle inclination that exceeds a predetermined threshold value.

Also, the hill start assist method according to this invention comprises the following steps:
- detect my means of an inclination sensor if the vehicle is or is not on a flat ground;
- if the vehicle is not on a flat ground, said control unit sends a message, preferably by the CAN lines, to the control unit managing the braking system, which will keep the vehicle braked;
- when said system detects that the gear is engaged, that the driver is pressing the accelerator pedal and that he/she is releasing the clutch at the same time, the brakes are released.

Further characteristics and advantages of the present invention will become clear from the following detailed description, that is merely illustrative and not limitative and is shown in the figures that are attached hereto, in which:

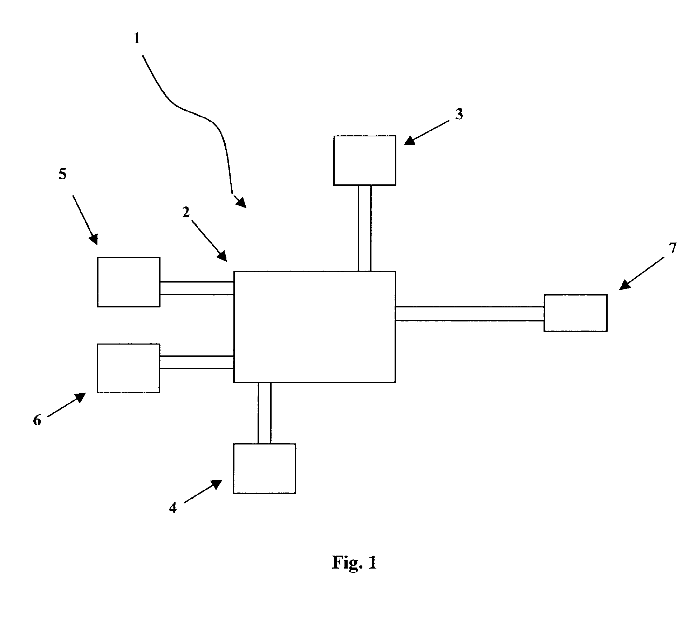

figure 1 shows a diagram of an embodiment of the hill start assist system according to this invention;
figure 2 shows a diagram of a second embodiment of the hill start assist system according to this invention;

A first embodiment of the hill start assist system 1 may comprise at least a control unit 2 connected to the system managing the braking system 3 of the vehicle, at least an acceleration sensor 4 able to detect if the accelerator is or is not pressed, and in addition at least a clutch sensor 5, able to detect if the clutch is pressed or is engaged.

The information exchange between the sensors and the electronic control unit may be advantageously carried out by the CAN multi-channel connection, which allows the control unit to be in communication with the other systems of the vehicle. Therefore it is advantageous that the same CAN system allows to receive and to send the messages about the controls for the hill start assist function.

The system according to this invention may further comprise a gear engaged sensor 6 which may send the gear engaged (or reverse gear) message and which uses at least an inclination sensor 7, advantageously integrated in the control unit itself, able to detect if the vehicle is on a flat ground and to distinguish if the vehicle is on an uphill or downhill slope.

The electronic control unit 2 is duly programmed in order to compare the vehicle inclination data, coming from the inclination sensor 7, with the gear engaged data coming from the sensor 6, as to detect if the start assist is necessary. The function is activated for the forward start if the front wheels are in a higher position than the rear wheels and if the forward gear is engaged (and the reverse gear is not engaged). Vice versa, the function is activated for the reverse gear start if the rear wheels are in a higher position that the front wheels and if the reverse gear is engaged (and the forward gear is not engaged).

The system according to this invention functions as follows.

If the inclination sensor 7 detects that the longitudinal inclination of the vehicle exceeds a predetermined threshold value, for example exceeding 5°, then the electronic control unit 2 detects a starting condition with the vehicle not on a flat ground and receives from the gear sensor 6 the information about the gear engaged, in order to activate the start assist procedure only in case of a hill start, that is in case the inclination of the road has the same direction as the driving direction.

Therefore, the control unit 2 activates the hill start assist procedure, in case one of these two hill start conditions occur and if the following conditions occur at the same time: the data about the accelerator pedal detected by the sensor 4 indicates that the pedal is released, at the same time the clutch sensor 5 indicates that the clutch is pressed and the gear, detected by the sensor 6, is engaged and the control unit 2 detects that the vehicle is braked by the braking system 3. This procedure substantially consists in the management of the vehicle braking system by the electronic control unit 2. The control unit 2 operates on the braking system 3 by keeping the vehicle braked for a predetermined time interval, which may be of some seconds, or alternatively, until the clutch sensor 5 detects that the clutch is engaged, or until the accelerator sensor 4 detects a pressure on the accelerator pedal by the driver. In the case of a vehicle provided with automatic transmission, that is without clutch controls, the braking system is released by the simple pressure on the accelerator pedal by the driver.

This way the control unit keeps the vehicle braked, avoiding it to roll backwards because of the road inclination, without any manual intervention on the driver on any control in order to activate the system.

In case of a vehicle with manual mechanical transmission, in addition to the accelerator sensor 4 which informs that the driver is pressing on the accelerator pedal, it may be required that the clutch sensor 5 informs that the driver is gradually releasing the clutch, in order to make the control unit 2 release the brakes by sending an appropriate signal to the braking system 3.

In the system and the method according to this invention, if the inclination sensor 7 detects that the vehicle has an inclination exceeding the predetermined threshold value and if the information provided by the other sensors indicates that the driver is going to do a hill start according to what described above, the systems automatically keeps the vehicle braked until the driver presses the accelerator pedal and, in case of a manual transmission, releases the clutch, or for a predetermined time interval, modifiable as a control unit parameter, advantageously of some seconds.

The same system, if appropriately programmed, may assist the hill start of a vehicle provided with automatic transmission.

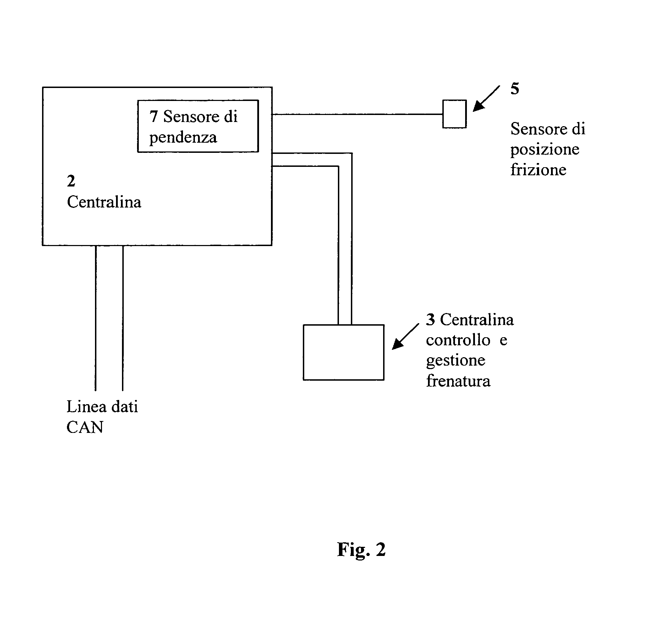

With particular reference to figure 2, in the system according to this invention the inclination sensor 7 may be integrated in said control unit 2.

Moreover, as said above, the control unit may be in communication with the other systems of the vehicle using one or more CAN lines.

Therefore it has been shown that the system and the method for assisting the hill start according to the present invention achieves the purpose and the objects proposed.

In particular, it has been shown that the system with integrated inclination sensor and the method according to this invention allow to avoid the clutch and the other transmission parts to jerk and to skid in case of hill start, making the starting procedure completely automated.

Therefore with the system and the method for assisting the hill start the driver does not have to either brake during the hill start procedure or activate the system, which, on the contrary, automatically activates when the inclination sensor detects a vehicle inclination above a predetermined threshold value and detects that the other activation conditions are fulfilled. At the same time, the integration of a dedicated inclination sensor makes the system cheaper and allows also to simplify the wiring, by avoiding the external placement of the sensor which should be powered, connected, and protected from the atmospheric agents, since it is on the frame of an industrial vehicle.

It will be apparent to the person skilled in the art that various modifications can be conceived and reduced to practice without departing from the scope of the invention.

Therefore, the scope of the claims is not limited to the illustrations or the preferred embodiments shown in the description as an example, but rather the claims include all the patentable novelties deriving from the present invention, including all the equivalent embodiments for a person skilled in the art.

## Claims

1. System (1) for assisting the hill start particularly of average and heavy vehicles, comprising at least a control unit (2) in communication with the braking system (3) of said vehicle and able to command said braking system (3) and, in communication with said control unit (2), at least an accelerator sensor (4) able to detect and to send the information about the accelerator control status and at least a gear engaged sensor (6) able to detect which gear is selected and to send this information to said control unit, **characterized in that** it further comprises at least an inclination sensor (7) able to detect the longitudinal inclination of the vehicle and to send the respective inclination data to said control unit (2).

2. System (1) for assisting the hill start according to the previous claim, **characterized in that** it further comprises, also in communication with said control unit (2), a clutch sensor (5) able to detect if the clutch is engaged.

3. System (1) for assisting the hill start according to one or more previous claims, **characterized in that** said control unit (2) communicates with said external sensors (4, 5, 6, 7) and with the other systems (3) on the vehicle by means of one or more CAN lines.

4. System (1) for assisting the hill start according to one or more previous claims, **characterized in that** said inclination sensor (7) is integrated in said control unit (2).

5. Method for assisting the hill start of a vehicle, **characterized in that** it comprises the following steps:
a) prepare a hill start assist system according to one or more previous claims;
b) read the longitudinal inclination data of the vehicle coming from said inclination sensor (7)
c) compare by means of the control unit (2) said vehicle inclination data with a predetermined threshold value;
d) in case the vehicle inclination data exceeds said threshold value, verify the indication of the accelerator position sensor (4), of the gear engaged sensor (6) and of the braking system status (3);
e) if the vehicle is at the same time standing with braking system (3) activated, gear engaged, accelerator released and inclination exceeding the threshold value with an inclination corresponding to an uphill in the same direction as the driving direction, automatic activation of the braking system (3) by the control unit (2).

6. Method for assisting the hill start of a vehicle, according to the previous claim, **characterized in that** said hill start assist system is of the type comprising said clutch sensor (5) and **in that** said step d) comprises the further check of the signal sent by the clutch sensor (5) which indicates that the clutch is pressed.

7. Method for assisting the hill start of a vehicle according to any of the claims 5 or 6, **characterized in that** it comprises a further step consisting in:
f) keeping the braking system (3) automatically engaged by the control unit (2) for a predetermined time interval.

8. Method for assisting the hill start of a vehicle according to any of the claims 5 or 6, **characterized in that** it comprises a further step consisting in:
g) keeping the braking system (3) automatically engaged by the control unit (2) until said control unit (2) receives the indication by the accelerator position sensor (4) that the driver has pressed the accelerator control in order to start the vehicle.
